# EUROPÄISCHE PATENTANMELDUNG

(11) **EP 0 959 477 A1**
(43) Veröffentlichungstag der Anmeldung: **24.11.1999**
(21) Anmeldenummer: 99108589.5
(22) Anmeldetag: 06.05.1999
(51) Int. Cl.: G21C 19/317

(54) **Vorrichtung zur katalytischen Rekombination von Wasserstoff und Sauerstoff im Sicherheitsbehälter eines Leichtwasser-Kernreaktors**

(30) Priorität: 19.05.1998 DE 19822380
(71) Anmelder: BATTELLE INGENIEURTECHNIK GmbH, D-65760 Eschborn (DE)
(72) Erfinder: Fischer, Karsten, Dr., 65719 Hofheim (DE); Geiss, Manfred, Dr., 35423 Lich (DE)
(74) Vertreter: Lippert, Marianne

(57) **Zusammenfassung**

Vorrichtung zur katalytischen Rekombination von Wasserstoff und Sauerstoff im Sicherheitsbehälter eines Leichtwasser-Kernreaktors mit Elementen, die eine Beschichtung aus Platin oder Palladium oder einer metallischen Platin und/oder Palladium enthaltenden Legierung tragen, und entweder als an sich bekannte Isolierelemente zur wärmetechnischen Isolierung der Kühlkreislaufkomponenten im Sicherheitsbehälter des Leichtwasser-Kernreaktors mit einer von einem Mantel umgebenen Isolierung ausgebildet sind, auf dem die Beschichtung vorgesehen ist, oder in Form von Blechen ausgebildet sind, die eine Außenseite mit der Beschichtung aufweisen und deren Form auf die Oberflächenform der Isolierelemente abgestimmt ist, auf denen sie durch eine dauerhafte Verbindung oder mittels lösbarer Anbringungsmittel anbringbar sind.

## Beschreibung

Die Erfindung betrifft eine Vorrichtung zur katalytischen Rekombination von Wasserstoff und Sauerstoff im Sicherheitsbehälter eines Leichtwasser-Kernreaktors, speziell, um hierdurch den bei einem Störfall in einem Kernkraftwerk in den Sicherheitsbehälter freigesetzten Wasserstoff katalytisch zu rekombinieren.

Passive und aktive Rekombinations-Vorrichtungen zur Bewältigung von unfallbedingten Wasserstoff-Freisetzungen aus dem Primärbehälter eines Leichtwasserreaktors in dessen Sicherheitsbehälter sind seit dem Störfall im Reaktor in Three Miles Island (USA) im Jahr 1979 entwickelt worden, und eine Vielzahl dabei möglicher Ausführungen ist im Hinblick auf ihre ausreichende Wirkung getestet worden. Einen guten Überblick der verschiedenen Lösungen für solche Vorrichtungen gibt der Aufsatz "Entwicklung und Untersuchung von Sicherheitselementen zum Abbau von Wasserstoff mittels katalytischer Verfahren" von P. Bröckerhoff und E.-A. Reinecke aus 1997. In diesem Aufsatz ist auch die Wasserstoffproblematik detailliert erläutert, die durch die in Frage stehenden Vorrichtungen bewältigt werden soll. Diese sollen bei Störfällen (insbesondere bedingt durch einen Ausfall der Kühlung des Reaktorkerns) durch frühzeitige Rekombination von dabei auftretendem Wasserstoff die Bildung kritischer angereicherter, brennbarer Gasgemische aus Wasserstoff und Sauerstoff verhindern. Solche Gemische können sonst zu einer Beschädigung oder Zerstörung des Sicherheitsbehälters, begleitet von einer entsprechenden Radioaktivitätsfreisetzung führen. Auf diese allgemein bekannte Problematik wird hier nicht näher eingegangen.

Die entwickelten Vorrichtungen umfassen z.B. mit Katalysatormaterial beschichtete Aluminium- oder Stahlfolien, die zusammengelegt in Kästen innerhalb des Sicherheitsbehälters aufbewahrt werden, bei Wasserstoffbildung aus den Kästen herausfallen und sich dabei in unterschiedlichen Höhen fangen und entfalten.

Auch wurden Versuche an einzelnen z.B. mit Platin oder Palladium beschichteten Platten durchgeführt, wobei sich rostfreier Stahl als Trägermaterial gegenüber Aluminium oder auch Kupfer bewährte und zuverlässig Oberflächenbeläge in Form von Hydroxidablagerungen auf der Katalysatoroberfläche verhinderte. Ferner ist eine Vielfalt von kassettenartigen Rekombinatorvorrichtungen mit Katalysatorblechpaketen oder mit katalytisch beschichtetem Granulat vorgeschlagen worden, die im Sicherheitsbehälter des Reaktors angeordnet werden sollen. Es gibt Abschätzungen über die Anzahl von solchen Vorrichtungen, die in einem Sicherheitsbehälter anzuordnen sind, um einen Störfall wirksam beherrschen zu können. Man hat sich bei der Auslegung der Rekombinatorgehäuse darum bemüht, möglichst kleine Gehäuse zu entwickeln und z.B. in Betracht gezogen, lose Rekombinatormaterialschüttungen in geeigneten Gehäusen in der Nähe der potentiellen Wasserstoffquellen anzuordnen.

Von großer Bedeutung für die Wirksamkeit der an unterschiedlichen Positionen im Sicherheitsbehälter anzuordnenden Vorrichtungen ist die Konvektionsströmung, die durch die Wärmefreisetzung bei der Rekombination ausgelöst wird und dazu beiträgt, daß eine homogene Vermischung der Atmosphäre im Sicherheitsbehälter erfolgt und weiterer Wasserstoff zu den katalytisch wirksamen Oberflächen aus Platin, Palladium oder Metall-Legierungen mit Platin oder Palladiumanteilen transportiert wird.

Verfahren zum Aufbringen möglichst wirksamer katalytischer Schichten sind im obigen Aufsatz angesprochen und finden sich z.B. im US-Patent 5 643 850, wobei sich poröse Schichten als vorteilhaft erwiesen haben.

Gleich welche der unterschiedlichen vorgeschlagenen Lösungen gewählt wird, um die katalytisch wirksamen Oberflächen in den Sicherheitsbehälter einzubringen, erfordert die Anbringung der Rekombinatorvorrichtungen nicht nur eine sorgfältige Planung geeigneter und ausreichend dicht verteilter Anbringungsorte, sondern auch eine beträchtliche Stillstandszeit des Reaktors für die Anbringung. Beide Anforderungen sind bislang im Grunde noch nicht zufriedenstellend gelöst worden. Dies ist insbesondere deshalb gravierend, da nun endgültig die umstrittenen aktiven katalytischen Zünder zur Wasserstoffverbrennung nicht mehr verwendet werden und durch die passiven Rekombinatoren der geschilderten Art ersetzt werden sollen.

Die Erfindung gemäß Anspruch 1 bzw. 2 schafft hier Abhilfe und löst die Aufgabe, die Problematik der Stillstandszeiten weitestgehend zu bewältigen.

Dabei beschreitet die Erfindung insofern einen völlig anderen Weg als der bisherige Stand der Technik, indem sie das bislang als notwendig erachtete und kontinuierlich weiterentwickelte Konzept verläßt, die mit Katalysatormaterial beschichteten Elemente als eigenständige Vorrichtungselemente aufzubauen, die im Sicherheitsbehälter positioniert werden müssen. Stattdessen wird erfindungsgemäß ein in jedem Leichtwasserreaktor vorhandenes Vorrichtungselement im Raum des Sicherheitsbehälters als Träger für die katalytisch wirksame Schicht genutzt. Dieses Vorrichtungselement gemäß Anspruch 1 und 2 ist, wie im folgenden dargelegt, als ein solcher Träger außerordentlich geeignet und erbringt wichtige Vorteile.

Man hat zwar in der DE 36 14 267 A1 vor über zehn Jahren vorgeschlagen, z.B. das Frischdampfsieb des dem Rekatordruckbehälter zugeordneten Primärkreises oder Wellbleche des Dampftrockners im Druckbehälter mit einer katalytischen Oberfläche zu versehen und im Wärmetauscher katalytisch beschichtete Metalldrahtknäuel vorzusehen. Diese Maßnahmen wurden jedoch im Druckbehälter bzw. dem diesem zugeordneten Primärkreis vorgenommen, um das sich im normalen Reaktorbetrieb bildende Radiolysegas aus Wasserstoff und Sauerstoff zu rekombinieren. In einem Störfall, bei dem Wasserstoff in den umgebenden Raum des Sicherheitsbehälters, d.h. in den Raum außerhalb des Druckbehälters und des diesem zugeordneten Primärkreis eindringt, sind diese Maßnahmen unwirksam. Daher hat man die weiter oben geschilderten Vorrichtungen, die im Raum des Sicherheitsbehälters anzuordnen sind, kontinuierlich weiterentwickelt, wie z.B. die DE 196 36 557 A1 aus dem Jahre 1998 zeigt.

Gegenüber diesen Vorrichtungen ist beim Einsatz der erfindungsgemäßen Vorrichtung zunächst einmal die Stillstandszeit gegenüber der Zeit, die ohnehin benötigt wird, um die anspruchsgemäßen Isolierelemente auszutauschen oder erstmalig zu installieren, bei der Ausbildung gemäß Anspruch 1 praktisch nicht erhöht. Bei nachträglicher Bestückung der Isolierelemente mit einem katalysatorbeschichteten Blech gemäß Anspruch 2 wäre die erforderliche Stillstandszeit erfahrungsgemäß auch deshalb gering, weil hier die schnelle Anbringungstechnik ausnutzbar ist, wie sie für die Isolierelemente selbst zutrifft.

Die beanspruchten Isolierelemente, denen die Bleche von ihrer Form und ihrem Aufbau nachgebildet sind, sind nämlich speziell zur Erzielung kurzer Installationszeiten ausgelegt. In der Vergangenheit hatte man Isoliermatten um die Rohrleitungen, Behälter und Armaturen des Primär- und Sekundär-Kühlkreislaufs gelegt und mit Drähten und dergleichen fixiert. Dies war sowohl bei der Montage als auch Demontage zeitaufwendig. Die daraufhin entwickelten, zumeist schalenartigen Isolierelemente, die in der Regel aus einem Stahlmantel oder -gehäuse mit Isolierfüllung bestehen, werden nach Vermessen der Kühlsystemkomponenten formmäßig hierauf abgestimmt hergestellt und dokumentiert. Sie werden dann mit schnell lös- und schließbaren Verschlußelementen ausgestattet, so daß sie in äußerst kurzer Zeit an allen Kühlsystemkomponenten angebracht werden können. Obgleich die Kosten für die Vermessung, Dokumentation und Herstellung derartiger Isolierelemente im Vergleich zu den konventionellen Isoliermaßnahmen deutlich höher liegen, hat sich diese Isolier-Technologie infolge der drastisch verkürzten Stillstandszeiten und der hierdurch gesteigerten Anlagennutzungsmöglichkeit durchgesetzt.

Es können die bei den jährlich erfolgenden Revisionen demontierten Isolierelemente wahlweise durch neue, entsprechend beschichtete ersetzt werden, nachträglich beschichtet werden oder bei der erneuten Montage mit einem angepaßten Blech gemäß Anspruch 2 versehen werden. In all diesen Fällen erhöht sich die Installationszeit praktisch nicht. Bei der nächsten Revision erfolgt dann die Qualitätssicherung der Katalysatorschicht gleichzeitig mit den ohnehin erforderlichen Inspektionsarbeiten.

Die Anbringung zusätzlicher Bleche gemäß Anspruch 2 kann insbesondere dann von Vorteil sein, wenn die Isolierelemente nicht den üblichen Metallmantel aus Stahl aufweisen, der eine bekanntermaßen gute Oberfläche zur Aufbringung der in Frage kommenden Katalysatormaterialien bietet. Zur Herstellung der Bleche kann die Dokumentation der Isolierelemente genutzt werden, so daß keine neuen Vermessungen erforderlich sind.

Die zusätzlichen Bleche können auch beabstandet an den Isolierelementen angebracht werden und zudem auf ihrer Rückseite katalytisch beschichtet sein. In diesem Fall können sie vorteilhaft bereits auf ihrer katalytischen Rückseite von aus einem Leck austretendem Wasserstoff direkt angeströmt bzw. hinterströmt werden.

Da erfindungsgemäß auch bei der Lösung nach Anspruch 2 praktisch keine zusätzlichen Komponenten in den Sicherheitsbehälter des Reaktors einzubringen sind, entfallen die sonst erforderlichen Nachweise hinsichtlich Erdbebensicherheit. Es wird keine zusätzliche Dosisbelastung für das Personal hervorgerufen.

Arbeitsbereiche und notwendige Durchgänge werden nicht durch zusätzlich zu installierende Vorrichtungen nach dem Stand der Technik versperrt. Wartungs- und Reparaturarbeiten werden nicht behindert. Hier ist auch zu beachten, daß im Kühlsystembereich, insbesondere im Bereich de Dampferzeugers ohnehin nur wenig Installationsraum für zusätzliche Geräte zur Verfügung steht.

Sieht man bei allen Isolierelementen der Hauptkomponenten des Primärkühlkreislaufs die katalytisch wirksame Beschichtung vor, so steht in einem 1300 MW-Kernkraftwerk eine Fläche von etwa 2000 m2 zur Verfügung. Diese Fläche reicht aus, um eine plötzlich freigesetzte Wasserstoffmasse von 1500 kg innerhalb von 3,1 Stunden soweit zu rekombinieren, daß die Zündgrenze von 4% unterschritten wird. Durch diese mögliche große räumliche Verteilung der Rekombinationsflächen über die äußere Mantelfläche der Isolierelemente kann das Zündrisiko deutlich herabgesetzt werden. Hierbei ist zu beachten, daß erfindungsgemäß eine große Dichte von Rekombinationsflächen in der Nähe der Bereiche möglich ist, in denen die Leckbildung wahrscheinlicher ist, nämlich in den unteren Anlagenräumen bzw. nahe den Dampferzeugern. Hierdurch ist eine hohe und frühzeitige Wirksamkeit der Rekombinationsflächen gegeben. Es kommt mit anderen Worten infolge des nur geringen Abstandes zwischen Leck und nächstliegenden Rekombinationsflächen zu einem schnellen Einsetzen der Rekombination und es werden die sonst zu erwartenden Schwellwerte für einen Reaktionsstart vermieden.

Durch die Wärmedämmung im Innern der Isolierelemente erfolgt ferner eine schnelle Aufheizung der Rekombinationsfläche bei Wasserstoffeintrag. Dies ist ein wichtiger Vorteil, denn die Rekombinationsrate steigt stark mit der Temperatur an. Im Stand der Technik hat man daher zusätzliche Maßnahmen in Form spezieller zusätzlicher Schichten oder konstruktiver Vorrichtungsmerkmale getroffen, um eine Temperaturerhöhung durch die erfolgende Reaktion zu verstärken und auszunutzen. Auch für die Rekombination des im Normalbetrieb auftretenden Radiolysegases wurde in der weiter oben erwähnten DE 36 14 267 A1 vorgeschlagen, die katalytisch aktiven Oberflächen aufzuheizen. Erfindungsgemäß kann man auf derartige Maßnahmen zur Temperaturerhöhung verzichten.

Bei Beschichtung von Stahl bleiben die Katalysatorflächen in der Regel über lange Zeitspannen unversehrt und frei von Oberflächenbelägen. Als zusätzliche Maßnahme kann man auf der Katalysatorschicht eine Schutzschicht aufbringen, die sich im Fall eines Reaktorunfalls bei Temperaturerhöhung auflöst und die Katalysatorfläche freilegt.

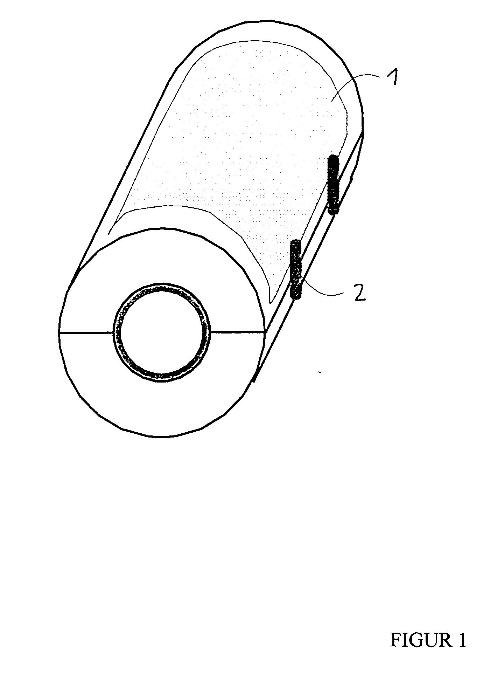

In der beiliegenden Figur 1 ist ein typisches Beispiel eines zweischaligen Isolierelements mit einer wärmedämmenden Füllung gezeigt, die von einem Mantel aus rostfreiem Stahl umgeben ist. Das Isolierelement ist um ein Rohr gelegt und ist mit einer katalytisch wirksamen Schicht 1 auf seiner äußeren Zylindermantelfläche beschichtet. Als Beschichtungsverfahren kommen die bekannten Verfahren in Betracht, die im eingangs erwähnten Aufsatz und US-Patent erwähnt sind, nämlich beispielsweise Vakuumbeschichtungsverfahren. Auch werden vorzugsweise sogenannte Washcoat-Überzüge eingesetzt. Als Materialien werden Platin oder Palladium oder metallische Legierungen mit Platin und/oder Palladiumanteilen eingesetzt, die z.B. auch Nickel und Kupfer enthalten können. Auch in diesem Zusammenhang sei auf den erwähnten Aufsatz verwiesen, in dem auch auf die bekannten und bewährten Katalysatormaterialien und Aufbringungsverfahren sowie die jeweiligen Fundstellen hierfür hingewiesen wird.

Die beiden gefüllten Schalen des Isolierelements sind über einen Hebelverschluß 2 miteinander verbunden. Ein entsprechendes Isolierelement wird vom Isoliertechnikhersteller Kaefer, Bremen, hergestellt und ist beispielsweise aus einschlägigen Prospekten dieses Herstellers entnehmbar. Speziell werden von diesem Hersteller Verschlüsse in Form von Camloc-Spannverschlüssen mit Gegenhaken zur Verbindung der Isolierelemente verwendet. Die Isolierelemente dieses Herstellers enthalten wahlweise Reflektionsfolienpakete, Granulate oder z.B. Mineralwolle als Wärmedämmungsmaterialien.

Im Falle anderer Kühlkomponenten wie Armaturen und Behältern sind die Isolierelemente der entsprechend anderen Oberflächengestalt angepaßt. Ferner sind speziell auch die schalenartigen Isolierelemente an den Großkomponenten (wie Dampferzeuger und Druckhalter) von Interesse. Die Größe der Elemente wird in der Regel auf etwa 30 kg begrenzt, um die Handhabung und Montage zu erleichtern.

Neben den erfindungsgemäß bevorzugten starren Isolierelementausführungen sind insbesondere bei Rohren auch mit matten- oder matratzenartige Gebilde auf die Rohre abgestimmter Größe mit Klettverschluß oder auch Hebelverschluß als Isolierelemente möglich, die auf der Außenseite auch eine dünne Blechabdeckung aufweisen können, die auf einer Isolierschicht sitzt. Auch hier ist eine erfindungsgemäße Ausgestaltung durch entsprechende Beschichtung einer Metall- bzw. Stahlaußenseite oder durch Bestückung mit einem zusätzlichen beschichteten Blech möglich.

Die alternative Lösung gemäß Anspruch 2 würde sich in der Darstellung kaum vom in der Figur gezeigten Beispiel unterscheiden. Das Blech könnte dauerhaft z.B. durch Schweiß-, Schraub- oder Nietverbindungen auf der Isolierelementoberfläche angebracht werden. Alternativ sind lösbare Verbindungselemente wählbar wie Schiebe- oder Steckverbindungen. Bei einem Rohrstück wird das Blech vorzugsweise die Form eines zweischaligen Zylindermantels mit auf das Isolierelement abgestimmter Länge aufweisen. Bei komplizierteren Isolierelementen kann es vorteilhaft sein, nicht deren gesamte Oberfläche mit einem katalytisch beschichteten Blech zu belegen, zumal, wie bereits ausgeführt, bereits im Primärkühlkreislauf ohnehin große Flächenbereiche zur Verfügung stehen. Die Bleche bestehen vorzugsweise aus Stahl, können jedoch auch in Form eines mehrschichtigen Blechs mit einer Stahlaußenseite oder auch anderen geeigneten Oberfläche für die Beschichtung mit den Katalysatormaterialien vorgesehen werden.

Die Isolierelemente des Sekundärkühlkreislaufs können selbstverständlich ebenfalls erfindungsgemäß ausgestaltet bzw. bestückt sein.

## Patentansprüche

1. Vorrichtung zur katalytischen Rekombination von Wasserstoff und Sauerstoff im Sicherheitsbehälter eines Leichtwasser-Kernreaktors mit Elementen, die eine Beschichtung aus Platin oder Palladium oder einer metallischen Platin und/oder Palladium enthaltenden Legierung tragen,
dadurch gekennzeichnet,
daß die Elemente an sich bekannte Isolierelemente zur wärmetechnischen Isolierung der Kühlkreislaufkomponenten im Sicherheitsbehälter des Leichtwasser-Kernreaktors mit einer von einem Mantel umgebenen Isolierung sind, dessen Form der Oberfläche einer jeweiligen Kreislaufkomponente angepaßt ist, an der das jeweilige Isolierelement mit Befestigungsmitteln anbringbar ist, und daß auf der nach außen weisenden Oberfläche des Isolierelements die Beschichtung zur katalytischen Rekombination aufgebracht ist.

2. Vorrichtung zur katalytischen Rekombination von Wasserstoff und Sauerstoff im Sicherheitsbehälter eines Leichtwasser-Kernreaktors mit Elementen, die eine Beschichtung aus Platin oder Palladium oder einer metallischen Platin und/oder Palladium enthaltenden Legierung tragen,
dadurch gekennzeichnet,
daß die Elemente Bleche sind, die eine Außenseite mit der Beschichtung zur katalytischen Rekombination aufweisen und deren Form auf die Oberflächenform an sich bekannter Isolierelemente zur wärmetechnischen Isolierung der Oberfläche von Kühlkreislaufkomponenten im Sicherheitsbehälter eines Leichtwasser-Kernreaktors mit einer von einem Mantel umgebenen Isolierung abgestimmt ist, dessen Form der Oberfläche einer jeweiligen Kreislaufkomponente angepaßt ist, an der das jeweilige Isolierelement mit Befestigungsmitteln anbringbar ist, und daß das Blech durch eine dauerhafte Verbindung oder mittels lösbarer Anbringungsmittel an der Oberfläche eines abgestimmten Isolierelements anbringbar ist.

3. Vorrichtung nach Anspruch 1 oder 2,
dadurch gekennzeichnet,
daß der Isolierelementmantel gemäß Anspruch 1 bzw. die Außenseite der Bleche gemäß Anspruch 2 aus Metall, vorzugsweise aus Stahl, besteht.

4. Vorrichtung nach einem der vorhergehenden Ansprüche,
dadurch gekennzeichnet,
daß die Beschichtung in Form eines sogenannten Washcoat-Überzugs auf die Außenseite des Isolierelements bzw. des darauf abgestimmten Blechs aufgebracht ist.

5. Vorrichtung nach einem der vorhergehenden Ansprüche,
dadurch gekennzeichnet,
daß das Isolierelement aus um die jeweilige Kühlkreislaufkomponente legbaren Schalen besteht und daß die Befestigungsmittel in Form lösbarer Befestigungsmittel eine Aneinanderbefestigung der zusammengefügten Schalen ermöglichen.

6. Vorrichtung nach Anspruch 2,
dadurch gekennzeichnet,
daß die dauerhafte Verbindung eine Schweiß-, Schraub- oder Nietverbindung ist und daß die lösbaren Anbringungsmittel eine Schiebe- oder Steckverbindung zwischen Isolierelement und von diesem abnehmbaren Blech ermöglichen.

7. Vorrichtung nach Anspruch 2 oder 6,
dadurch gekennzeichnet,
daß die Bleche auch auf ihrer Innenseite mit der Beschichtung versehen sind und beabstandet auf dem jeweiligen Isolierelement anbringbar sind.
